# FASCICULE DE BREVET EUROPEEN

(11) **EP 0 936 129 B1**
(45) Date de publication et mention de la délivrance du brevet: **03.07.2002**
(21) Numéro de dépôt: 99400231.9
(22) Date de dépôt: 02.02.1999
(51) Int. Cl.: B62D 1/18, G05G 1/04

(54) **Système de colonne de direction réglable en position pour véhicule automobile**
Lenksäulenpositionseinstellsystem für ein Kraftfahrzeug
Position adjustable steering column system for a motor vehicle

(30) Priorité: 12.02.1998 FR 9801710
(43) Date de publication de la demande: 18.08.1999
(73) Titulaire: ECIA - EQUIPEMENTS ET COMPOSANTS POUR L'INDUSTRIE AUTOMOBILE, F-25400 Audincourt (FR)
(72) Inventeur: Vuillemin, Guy, 25110 Baume-Les-Dames (FR); Balp, Lionel, 25400 Audincourt (FR)
(74) Mandataire: Habasque, Etienne Joel Jean-François

(56) Documents cités:
- EP-A- 0 770 536

## Description

La présente invention concerne un système de colonne de direction réglable en position pour véhicule automobile.

Plus particulièrement, l'invention se rapporte à un tel système qui comporte un ensemble de colonne associé à une structure de fixation sur le reste du véhicule par l'intermédiaire de moyens de réglage en position, munis de moyens de blocage déplaçables entre des positions de verrouillage et de déverrouillage par l'intermédiaire d'une poignée actionnable par un utilisateur, dont une extrémité est associée aux moyens de blocage et dont une autre extrémité comporte des moyens de manoeuvre par l'utilisateur (voir par exemple le document EP-A-0 770 536).

Il existe déjà dans l'état de la technique, différents modes de réalisation de ces systèmes de direction.

Différents modes de réalisation des moyens de blocage sont également connus.

C'est ainsi par exemple que ceux-ci peuvent comporter des moyens à came, à genouillère ou autre.

Différents modes de réalisation des moyens d'actionnement de ces moyens de blocage ont également été développés.

C'est ainsi par exemple que l'on trouve de façon générale dans l'état de la technique, des poignées de manoeuvre de ceux-ci ou encore des organes de motorisation de ces moyens de blocage constitués par exemple par des motoréducteurs électriques ou autres.

On conçoit que la qualité du blocage en position de l'ensemble de colonne par rapport à la structure de fixation de celui-ci sur le reste du véhicule, dépend notamment du couple de blocage et/ou de serrage des moyens de blocage.

Pour être facilement manipulables par n'importe quel utilisateur, on a donc été amené à prévoir des poignées présentant des bras de levier relativement importants permettant de réduire l'effort à exercer sur celles-ci pour déplacer les moyens de blocage entre leurs positions de verrouillage et de déverrouillage.

Ceci se traduit alors par des poignées présentant un encombrement relativement important et l'on conçoit que celles-ci sont relativement difficiles à implanter dans les pièces d'équipement du véhicule autour de l'ensemble de colonne.

Par ailleurs, et outre le fait que de telles poignées ont tendance à dégrader l'esthétique du poste de conduite du véhicule, elles peuvent également constituer un obstacle au déplacement notamment axial de l'ensemble de colonne ou tout au moins d'une partie de celui-ci, lors par exemple d'une course de rétraction d'absorption d'énergie de choc.

Le but de l'invention est donc de résoudre ces problèmes.

A cet effet, l'invention a pour objet un système de colonne de direction réglable en position pour véhicule automobile, du type comportant un ensemble de colonne associé à une structure de fixation sur le reste du véhicule, par l'intermédiaire de moyens de réglage en position, munis de moyens de blocage déplaçables entre des positions de verrouillage et de déverrouillage par l'intermédiaire d'une poignée actionnable par un utilisateur, dont une extrémité est associée aux moyens de blocage et dont une autre extrémité comporte des moyens de manoeuvre par l'utilisateur, caractérisé en ce que la poignée comporte au moins deux parties télescopiques l'une dans l'autre et déplaçables par l'utilisateur, entre une première position escamotée de rangement de la poignée et une seconde position déployée de manoeuvre pour augmenter le bras de levier de celle-ci.

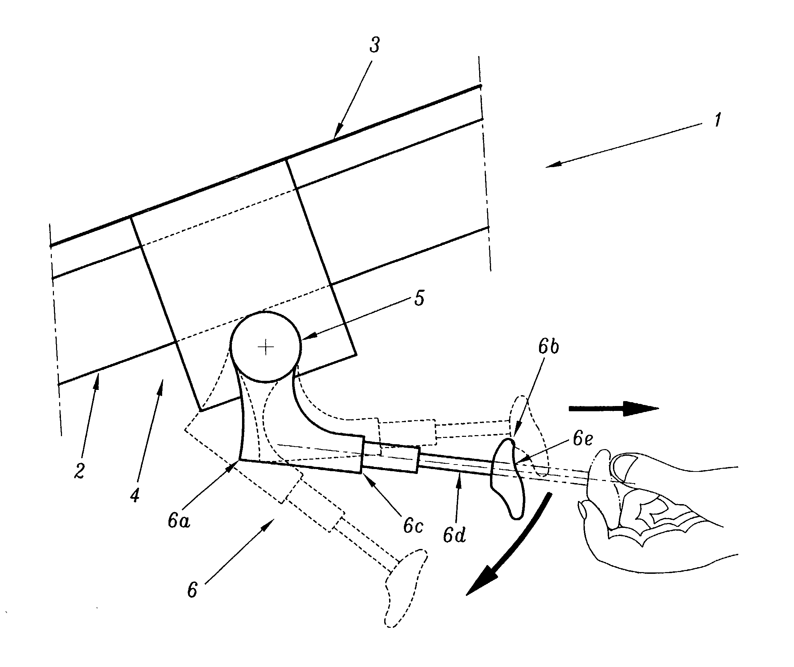

L'invention sera mieux comprise à l'aide de la description qui va suivre, donnée uniquement à titre d'exemple et faite en se référant au dessin annexé, qui représente une vue schématique d'un système de colonne de direction selon l'invention.

On reconnaît en effet sur cette figure, un système de colonne de direction réglable en position pour véhicule automobile, ce système étant désigné par la référence générale 1 sur cette figure.

Ce système comporte de façon classique un ensemble de colonne désigné par la référence générale 2 associé à une structure de fixation 3 de celui-ci sur le reste du véhicule, par l'intermédiaire de moyens de réglage en position désignés par la référence générale 4, ces moyens de réglage étant munis de moyens de blocage désignés par la référence générale 5, déplaçables entre des positions de verrouillage et de déverrouillage par l'intermédiaire d'une poignée désignée par la référence générale 6, actionnable par un utilisateur.

De façon classique également, l'une des extrémités de cette poignée 6, par exemple son extrémité 6a, est associée aux moyens de blocage 5, tandis que l'autre de ses extrémités, c'est-à-dire par exemple l'extrémité 6b de celle-ci, comporte des moyens de manoeuvre 6e par l'utilisateur.

Selon l'invention, cette poignée 6 comporte au moins deux parties déplaçables l'une par rapport à l'autre par l'utilisateur, entre une première position escamotée de rangement de la poignée et une seconde position déployée de manoeuvre pour augmenter le bras de levier de celle-ci.

C'est ainsi par exemple que sur cette figure, la poignée 6 représentée comporte deux parties désignées par les références 6c et 6d, déplaçables à coulissement axial l'une dans l'autre.

La partie 6c de cette poignée est alors reliée par exemple aux moyens de blocage 5 et comporte un évidement de réception à coulissement axial de la partie 6d, dont l'extrémité correspondante comporte une zone de manoeuvre, par exemple 6e, par l'utilisateur.

Des moyens élastiques de type classique peuvent être interposés entre ces deux parties de la poignée 6 pour rappeler celles-ci en position escamotée en vue de réduire l'encombrement de cette poignée lorsqu'elle n'est pas utilisée.

Ceci permet alors de résoudre les problèmes évoqués précédemment concernant l'encombrement, l'implantation et la facilité de manoeuvre de cette poignée, de même que les problèmes relatifs au fait que celle-ci puisse constituer un obstacle lors de la rétraction de l'ensemble en vue d'une absorption d'énergie de choc.

Il va de soi bien entendu que d'autres modes de réalisation encore de cette poignée, peuvent être envisagés.

C'est ainsi par exemple qu'une telle poignée peut comporter un nombre différent de parties déplaçables les unes par rapport aux autres entre les positions escamotée et déployée.

## Revendications

1. Système de colonne de direction réglable en position pour véhicule automobile, du type comportant un ensemble de colonne (2) associé à une structure de fixation (3) sur le reste du véhicule, par l'intermédiaire de moyens de réglage (4) en position, munis de moyens de blocage (5) déplaçables entre des positions de verrouillage et de déverrouillage par l'intermédiaire d'une poignée (6) actionnable par un utilisateur, dont une extrémité (6a) est associée aux moyens de blocage (5) et dont une autre extrémité (6b) comporte des moyens (6e) de manoeuvre par l'utilisateur, **caractérisé en ce que** la poignée (6) comporte au moins deux parties (6c,6d) télescopiques l'une dans l'autre et déplaçables par l'utilisateur, entre une première position escamotée de rangement de la poignée et une seconde position déployée de manoeuvre pour augmenter le bras de levier de celle-ci.

2. Système selon la revendication 1, **caractérisé en ce que** la poignée (6) comporte des moyens élastiques de rappel des deux parties (6c,6d) de poignée (6) en position escamotée.

## Patentansprüche

1. Positionsverstellbares Lenksäulensystem für Kraftfahrzeuge, mit einer Lenksäule, die mit einer Befestigungsstruktur (3) für die Befestigung am Rest des Fahrzeugs verbunden ist über Positionseinstellmittel (4) mit Blockiermitteln (5), die zwischen Verriegelungs- und Entriegelungspositionen verstellbar sind mit Hilfe eines Griffes (6), der von einem Benutzer betätigbar ist und dessen eines Ende (6a) mit den Blockiermitteln (5) verbunden ist und dessen anderes Ende Mittel (6e) zur Betätigung durch den Benutzer aufweist, **dadurch gekennzeichnet, daß** der Griff (6) wenigstens zwei teleskopartig ineinandergreifende Teile (6c, 6d) aufweist, die vom Benutzer zwischen einer ersten, eingefahrenen Position zur Aufbewahrung des Griffes und einer zweiten, ausgefahrenen Betätigungsposition zur Erhöhung des Hebelsarmes desselben verstellbar sind.

2. System nach Anspruch 1, **dadurch gekennzeichnet, daß** der Griff (6) elastische Mittel zum Zurückstellen der beiden Teile (6c, 6d) des Griffes (6) in die eingefahrene Position aufweist.

## Claims

1. Adjustable-position steering-column system for a motor-vehicle, of the type comprising a column unit (2) associated with a structure (3) for fixing to the rest of the vehicle by means of position-adjustment means (4) provided with locking means (5) movable between locking and unlocking positions by means of a handle (6) operable by a user, of which one end (6a) is associated with the locking means (5) and of which another end (6b) comprises means (6e) for operation by the user, **characterized in that** the handle (6) comprises at least two telescopic portions (6c, 6d) disposed one inside another and movable by the user between a first, retracted, stowage position of the handle and a second, extended operating position in order to increase the lever arm of the handle.

2. System according to Claim 1, **characterized in that** the handle (6) comprises resilient means for biasing the two portions (6c, 6d) of the handle (6) towards the retracted position.
